(19) Europäisches Patentamt

European Patent Office

Office européen des brevets

(11) EP 0 600 193 B1

(12) FASCICULE DE BREVET EUROPEEN

(45) Date de publication et mention de la délivrance du brevet:
**12.05.1999 Bulletin 1999/19**

(51) Int Cl.⁶: **H04L 5/06**, H04J 3/06

(21) Numéro de dépôt: 93116353.9

(22) Date de dépôt: 17.11.1989

(54) **Procédé de diffusion de données numériques, notamment pour la radiodiffusion à haut débit vers des mobiles, à entrelacement temps-fréquence**

Verfahren zur Rundsendung von digitalen Daten, insbesondere zu mobilen Stationen mit hohem Datenfluss, mit Zeitfrequenz-Verschachtelung

Method for broadcasting digital data, especially towards mobile stations, with a high bit rate, with time-frequency interweaving

(84) Etats contractants désignés:
**DE ES GB IT NL**

(30) Priorité: **18.11.1988 FR 8815216**

(43) Date de publication de la demande:
**08.06.1994 Bulletin 1994/23**

(62) Numéro(s) de document de la (des) demande(s) initiale(s) en application de l'article 76 CBE:
**89460041.0 / 0 369 917**

(73) Titulaires:
• **FRANCE TELECOM**
**75015 Paris (FR)**
• **TELEDIFFUSION DE FRANCE SA**
**75932 Paris Cédex 15 (FR)**

(72) Inventeurs:
• **Pommier, Daniel**
**F-35000 Rennes (FR)**
• **Le Floch, Bernard**
**F-35000 Rennes (FR)**

(74) Mandataire: **Vidon, Patrice**
**Cabinet Patrice Vidon,**
**Immeuble Germanium,**
**80, Avenue des Buttes-de-Coesmes**
**35700 Rennes (FR)**

(56) Documents cités:
**WO-A-88/00417**

• **EBU REVIEW- TECHNICAL, no. 224, Août 1987, BRUSSELS BE, pages 168 - 190 LASSALLE & ALARD 'Principles of modulation and channel coding for digital broadcasting for mobile receivers'**

## Description

Le domaine de l'invention est celui de la diffusion de données numériques destinées à être reçues notamment par des mobiles circulant en milieu urbain, c'est-à-dire en présence de parasites et de brouillage, et dans des conditions de multipropagation (processus de RAYLEIGH) engendrant un phénomène d'évanouissement (fading).

L'invention s'applique plus particulièrement, mais non exclusivement, au système de radiodiffusion sonore numérique tel que décrit dans le document WO-A-88 00 417 au nom des mêmes déposants. Le système de diffusion numérique présenté dans cette demande de brevet antérieure est basé sur l'utilisation conjointe d'un dispositif de codage de canal, et d'un procédé de modulation par multiplexage de fréquences orthogonales (système COFDM : Coding Orthogonal Frequency Division Multiplex).

Le procédé de modulation proprement dit de ce système connu consiste à assurer la répartition d'éléments numériques constitutifs du signal de données dans l'espace fréquence-temps f-t et à émettre simultanément des jeux d'éléments numériques sur M voies de diffusion parallèles au moyen d'un multiplex de fréquences porteuses orthogonales. Ce type de modulation permet d'éviter que deux éléments successifs du train de données soient émis à la même fréquence. Ceci permet d'absorber la sélectivité fluctuante en fréquence du canal, en dispersant fréquentiellement, pendant la diffusion, les éléments numériques initialement adjacents.

Le processus de codage connu vise pour sa part à permettre de traiter les échantillons issus du démodulateur pour absorber l'effet de variation d'amplitude du signal reçu, due au processus de Rayleigh. Le codage est avantageusement un codage convolutif, éventuellement concaténé à un codage du type REED-SOLOMON.

De façon connue, les éléments numériques codés sont de plus entrelacés, tant en temps qu'en fréquence, de façon à maximiser l'indépendance statistique des échantillons vis-à-vis du processus de Rayleigh et du caractère sélectif du canal.

La présente invention a pour objectif de fournir un mode de réalisation optimisé de la structure de trame du signal diffusé, de façon à bénéficier au maximum des propriétés d'auto-synchronisation du procédé COFDM, et de maximiser la résistance du système aux parasites impulsionnels et au brouillage.

Cet objectif ainsi que d'autres qui apparaîtront par la suite sont atteints à l'aide d'un procédé de diffusion de données numériques selon la revendication 1.

De façon préférentielle, lesdits symboles sont constitués à partir d'une opération d'entrelacement fréquentielle au moyen d'une fonction déterministe réversible, ladite fonction consistant en un procédé de brassage d'indices desdites fréquences, avec maximisation de la dispersion des fréquences associées à des éléments numériques adjacents du signal de données source. Ledit brassage d'indices consiste avantageusement à appliquer une fonction du type à inversion de bit sur lesdits indices codés binaires.

L'entrelacement fréquentiel ainsi défini est avantageusement combiné à un entrelacement temporel réalisé par application de retards dont la valeur est attribuée à chaque élément numérique en appliquation d'une fonction réversible de l'indice de l'élément numérique, la fonction de retard (F) étant telle que le désentrelacement, dans l'ordre initial, et la récupération de chaque élément de la séquence source sont réalisés par application, à chaque élément numérique de même indice dans la séquence reçue, d'une valeur de retard complémentaire par rapport à la profondeur d'entrelacement maximale de la fonction de retard.

Selon une caractéristique complémentaire de l'invention, le procédé est du type mettant en oeuvre un codage convolutif des données à l'émetteur, et un décodage à décision douce par maximisation de vraisemblance au récepteur ;

caractérisé en ce que ledit traitement de correction et/ou d'annulation du signal utile reçu pour lesdites fréquences brouillées détectées consiste à informer ladite prise de décision douce au moyen de la puissance de bruit détecté sur chacune desdites fréquences.

D'autres caractéristiques et avantages de l'invention apparaitront à la lecture de la description suivante d'un mode de réalisation donné à titre d'exemple non limitatif, et des dessins annexés dans lesquels :

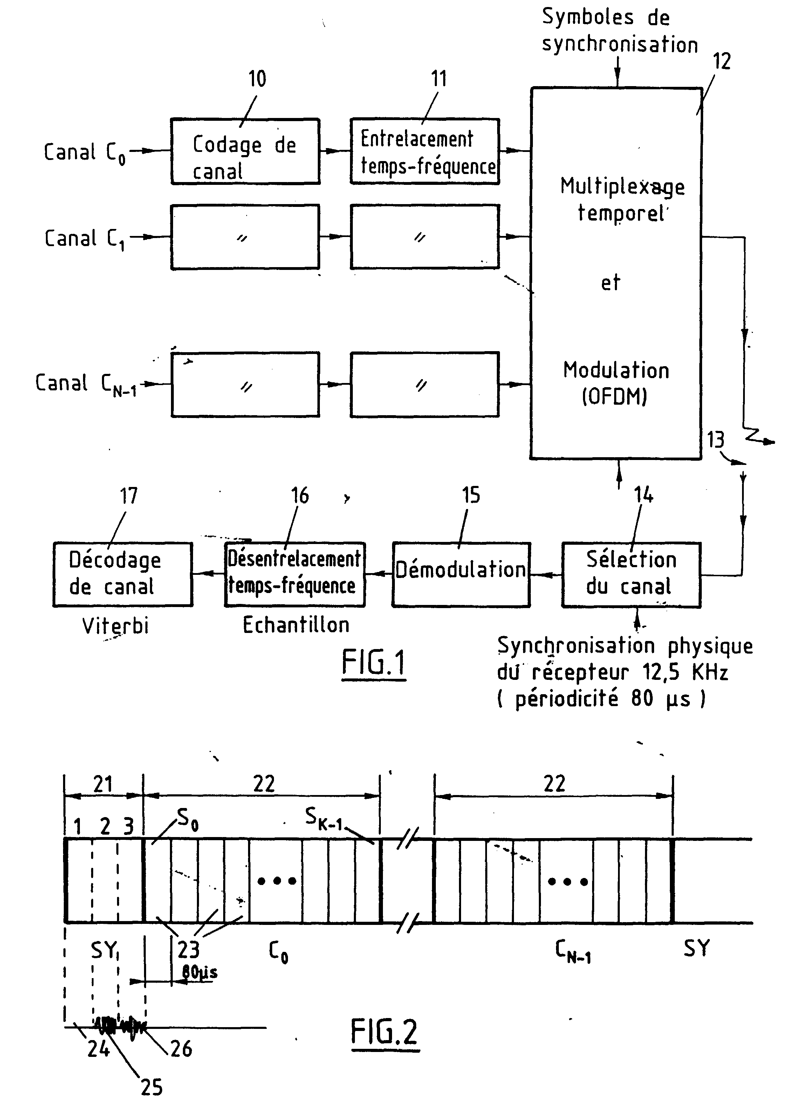

. la figure 1 est un schéma synoptique d'une chaîne d'émission-réception mettant en oeuvre le procédé de l'invention ;

. la figure 2 schématise la structure d'une trame telle que diffusée par le système de l'invention ;

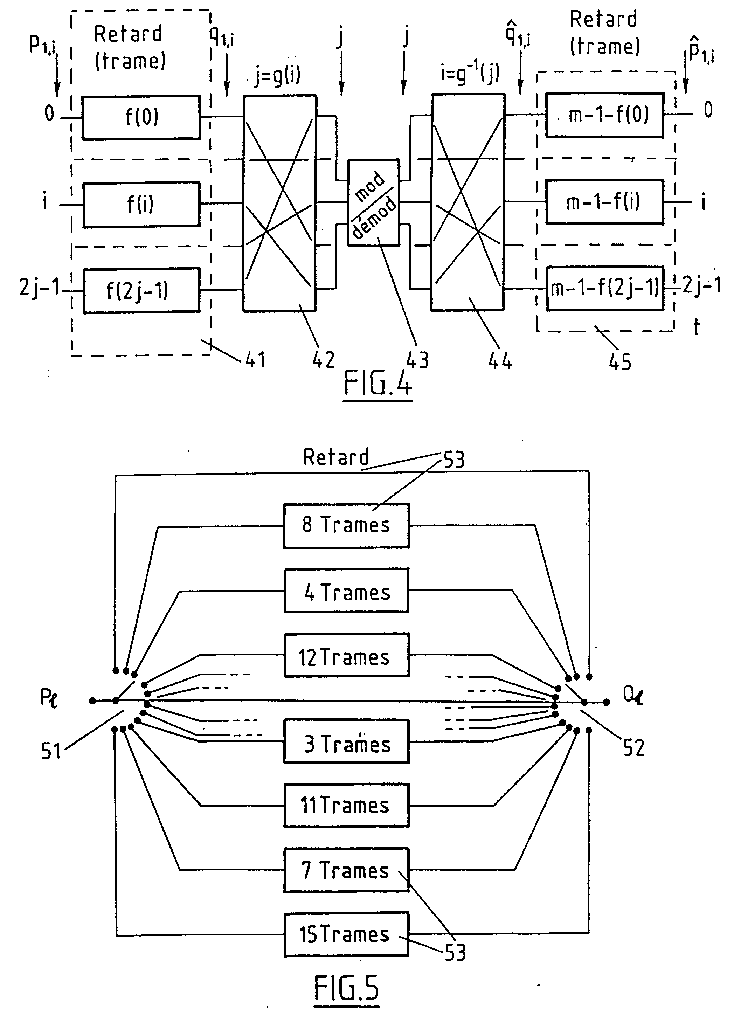

. la figure 4 schématise une chaîne d'entrelacement/désentrelacement temps-fréquence, optimale en coopération avec le principe de synchronisation de l'invention ;

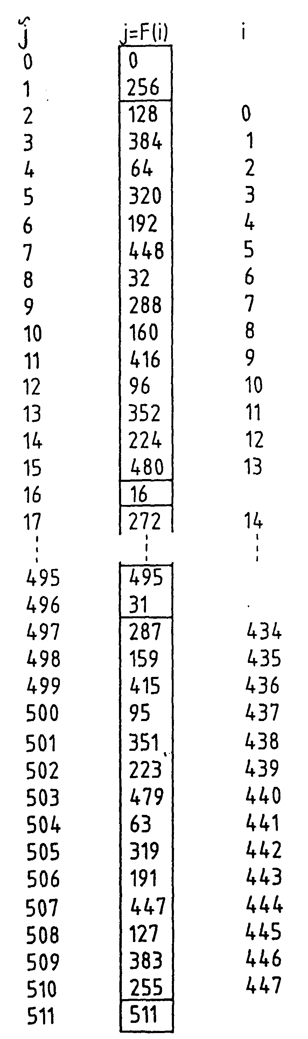

. la figure 5 illustre un mode de réalisation avantageux d'un entrelacement temporel convolutif implantable dans la chaîne de la figure 4 ;

. la figure 6 illustre un mode avantageux d'un brassage d'indices de fréquence, compatible avec l'entrelacement fréquentiel de la chaîne de la figure 4.

Les différents aspects du mode de réalisation qui va être décrit ci-après concernent plus particulièrement la radiodiffusion sonore numérique vers les mobiles, tels que notamment définis dans le programme EUREKA "Digital Audio Broadcasting" (DAB).

Toutefois, il est clair que le principe de diffusion numérique à haut débit de l'invention peut s'appliquer à tout type de communication, notamment dans des canaux soumis au processus de Rayleigh, tel que par exemple les communications aéronefs-satellites et autres.

Dans l'application de radiodiffusion sonore numérique du programme DAB, un objectif peut être par exemple de transmettre seize programmes stéréophoniques dans une bande de fréquence de 8 MHz de largeur, avec un débit numérique de l'ordre de 100 kbits (après compression).

Une chaîne de transmission telle que décrite dans les demandes de brevet mentionnées en préambule est présentée en figure 1.

Chacun des N (16) canaux $C_0$ à $C_{n-1}$ subit en parallèle un codage 10, puis un entrelacement temps-fréquence 11 sur une voie séparée, avant d'être soumis collectivement à un processus 12 de multiplexage temporel et de modulation OFDM.

Le codage 10 est avantageusement du type convolutif. L'entrelacement temps-fréquence 11 a pour objectif de brasser les éléments numériques de chaque canal afin de leur conférer une indépendance maximale vis-à-vis des parasites et du brouillage du canal de diffusion 13.

La modulation OFDM, consiste à moduler des symboles constitués chacun d'un multiplex de fréquences orthogonales diffusées simultanément sur J voies. Cette opération peut être réalisée par une transformation de Fourier sur la séquence numérique codée et entrelacée de chaque canal $C_i$.

A titre d'exemple, dans une bande de fréquence de 8 MHz, on peut définir 512 fréquences porteuses séparées de 15 625 Hz. Parmi celles-ci 448 sont utilisables, après élimination de la fréquence centrale du spectre et des porteuses latérales (1/8e du spectre) pour tenir compte des contraintes de filtrage.

La chaîne de réception comporte les étapes de sélection de canal 14, de démodulation 15, de désentrelacement en fréquence 16 et de décodage 17 du canal désentrelacé.

L'opération 14 de sélection de canal s'effectue avantageusement par transformation de Fourier rapide TFR de façon à décimer le jeu de porteuses adéquatement entrelacées pour n'appliquer l'opération de démodulation OFDM que sur les porteuses du canal sélectionné (voir certificat d'addition 86 13271 déjà cité). Après le désentrelacement temps-fréquence 16, on applique avantageusement un décodage de Viterbi à décision douce 17.

La trame de données telle que diffusée à travers le canal 13 présente selon l'invention la structure de la Fig. 2.

La trame est constituée d'une entête 21, et de N canaux élémentaires 22 notés de $C_0$ à $C_{n-1}$ constitués chacun de K symboles 23, notés $S_0$ à $S_{k-1}$. Chaque symbole 23 est constitué par un multiplex de J porteuses orthogonales. Chaque canal Ci représente un flux de données particulier, indépendant des informations transmises sur les autres canaux.

L'entête 21 de la trame comporte un intervalle "vide" ou "blanc" 24 qui sert avantageusement à la fois pour effectuer une synchronisation analogique de la trame, et pour effectuer une extraction du brouillage du canal de diffusion.

L'analyse de la réponse impulsionnelle du canal permet de tenir compte des phénomènes d'écho pour la synchronisation. De plus, un intervalle de garde est avantageusement prévu entre chaque symbole de la trame, en vue d'absorber ces effets d'écho, et de limiter le phénomène d'interférence intersymbole. L'intervalle de garde est typiquement d'une valeur de 16 µs, ramenant la période de symbole utile à 64 µs.

La structure de trame réalisée résulte selon l'invention d'une double opération d'entrelacement temporel et d'entrelacement fréquentiel de la séquence source (fig. 4).

Le nombre d'éléments binaires par canal d'une même trame se présentant à l'entrée du système d'entrelacement dépend du nombre J de porteuses par symbole, du nombre K de symboles par canal et du nombre d'états de la modulation appliquée à chaque porteuse. Dans le cas d'une modulation à 4 états de phase, la taille des blocs $P_l$ de données se présentant à chaque trame à l'entrée de ce système est de 2.J.K bits (l désignant l'indice de la trame).

A titre d'exemple, si J = 448 et K = 9 (k = 0 à 8 désigne le nombre d'ordre du symbole dans le canal), on obtient des blocs $P_i$ de données valant 8 064 bits.

Soit $P_{l,i}$ le bit d'indice i du bloc $P_l$ (i = 0 à 2 J.K-1)

L'entrelacement temporel consiste à former un bloc $Q_l$ de même taille que le bloc $P_l$, dont le bit d'indice i, noté $q_{l,i}$ est défini de la manière suivante :

$$q_{l,i} = p_{l-f(i),i}$$

Du choix de la fonction f(.), dépend la profondeur et l'efficacité de l'entrelacement. De manière générale, l'image de f est l'ensemble F = {O, 1 ..., m-1}, où m désigne la profondeur temporelle de l'entrelacement.

Un exemple d'entrelacement temporel évolutif est représenté en figure 5. L'exemple présenté est du type appliquant un procédé à inversion de bits défini par la fonction d'entrelacement suivante :

ñ :nombre réciproque associé à n :

si n est un nombre variant de 0 à $2_{p-l}$ s'écrivant sous la forme :

$$n = \Sigma \begin{smallmatrix} p-1 \\ i=0 \end{smallmatrix}$$

$n_i 2^i$ $n_i = 0$ ou 1

le nombre ñ associé vaut :

$$ñ = \Sigma \begin{smallmatrix} p-1 \\ i=0 \end{smallmatrix}$$

$n_i 2^{p-l-i}$

Le bloc $P_l$ est entrelacé conformément au schéma de la figure 5 de façon à former un bloc $Q_l$. Le double commutateur 51, 52 symbolise l'application de la fonction d'entrelacement par commutation successive sur chacun des blocs à retard 53. Soit $q_{l-1}$ le ième élément du bloc $Q_l$. On a la relation :

$$q_{l-1} = p_{l - R_{(i/16),i}}$$

La profondeur d'entrelacement est donc de 16 trames.

Bien entendu, cet exemple n'est donné qu'à titre illustratif et non limitatif.

L'affectation des éléments du bloc $Q_l$ aux K symboles du canal considéré dans la trame 1 se fait de la manière suivante.

Le bloc $Q_l$ est scindé en K paquets de 2J bits selon l'ordre croissant de l'indice i et ces paquets sont affectés aux K symboles du canal considéré, suivant le principe suivant :

$$(q_{l,0}, q_{l,2J-1})(q_{l,2J}, q_{l,4J-1})\cdots(q_{l,2J(K-1)}, q_{l,2JK-1})$$

$$n° \quad 0 \qquad\qquad 1 \qquad\qquad\qquad K-1$$

de

symbole

L'entrelacement fréquentiel consiste à affecter les 2J bits de chaque paquet aux J porteuses constituant le symbole associé au paquet considéré. Ces 2J bits sont regroupés en J paires qui sont associées bijectivement aux porteuses du symbole, selon la loi particulière qui définit l'entrelacement.

Un exemple d'entrelacement fréquentiel est illustré en figure 6, dans laquelle :

. i représente l'indice des éléments de la séquence ayant subit l'entrelacement temporel 41, et introduit dans le module d'entrelacement fréquentiel 42 ;

. $\bar{j}$ représente l'indice des éléments après entrelacement fréquentiel 42 ;

. la colonne $\bar{j}$ = F(i) illustre la mise en oeuvre de la fonction d'entrelacement par inversion de bits sur les indices des 512 fréquences porteuses constituant chaque multiplex.

On notera que chaque symbole élémentaire de modulation est constitué par une juxtaposition de 448 porteuses formant un sous-ensemble de l'ensemble :

$\{f_j = f_o + jDf\}$ (j = 0 à 511) où $f_o$ désigne une fréquence arbitraire et Df l'écart entre chaque porteuse.

Ce sous-ensemble est l'ensemble des porteuses fj, dont l'indice j satisfait à la condition (1) :

$$(1) \qquad 32 \leq j \leq 480, \ j =/\ 256$$

Ce choix est justifié par des contraintes liées à la faisabilité de certaines fonctions analogiques du récepteur. La suppression de la porteuse centrale pallie le problème de la dérive en continu des circuits analogiques numériques, et la suppression des porteuses latérales du spectre (7/8 du spectre total) remédie aux effets de bord des filtres de coupure.

Soit j le i+1 ième nombre satisfaisant à la condition (1) dans la liste des indices de 0 à 511 classés dans leur ordre réciproque croissant. Cette relation définit la fonction j = F(i). L'entrelacement fréquentiel est caractérisé par les relations :

- si $E(i/448)$ est pair $\qquad u_{j,k} = q_{l,i}$
- si $E(i/448)$ est impair $\qquad v_{j,k} = q_{l,i}$

avec i = à 8 063, k = E(i/896) et j = F(R(i/448))

et avec E(p/q) : partie entière de p/q

R(p/q) : reste de la division de p par q.

Dans ces relations, $(u_{j,k}, v_{j,k})$ désigne le couple d'éléments binaires déterminant la phase de la porteuse fj du symbole d'ordre k. (Chaque porteuse subit une modulation à 4 état de phase).

En d'autres termes, chacun des couples d'éléments binaires est constitué à partir de la séquence source d'éléments numériques en constituant des paquets de 2M d'éléments constitutifs dans ladite séquence, et en associant les éléments deux à deux dans chaque paquet selon un critère de maximisation de dispersion des éléments numériques adjacents de la séquence source. Les couples d'éléments numériques sont constitués en scindant chacun des paquets de données en deux demi-paquets et en appariant les éléments numériques de même rang dans chaque demi-paquet.

Une caractéristique essentielle de l'invention est que pourvu que les fonctions F d'entrelacement temporel et G d'entrelacement fréquentiel soient convenablement choisies l'une par rapport à l'autre, l'opération de désentrelacement s'effectue de façon implicite par application de la fonction combinée $(GoF)^{-1}$. Ceci résulte d'une part de la simplicité de synchronisation décrite plus haut, qui permet d'obtenir implicitement la séquence reçue du canal de transmission 43 avec une connaissance immédiate de l'indice des symboles dans la séquence, et d'autre part de la complémentarité des deux fonctions d'entrelacements temporel et fréquentiel.

La reconstitution des blocs $Q_l$ se fait alors très simplement dans le module de désentrelacement en utilisant le caractère bijectif de l'entrelacement fréquentiel. Le récepteur utilisant une démodulation différentielle, les données sont restituées sans problème d'ambiguïté de phase.

Le principe du désentrelacement temporel 45 consiste à appliquer aux éléments binaires de chaque bloc $Q_l$ le retard complémentaire par rapport à la profondeur de l'entrelacement du retard subi à l'émission. La connaissance de ce retard complémentaire s'exprime par m-f(i)-1, et se déduit directement de l'indice i de l'élément binaire et de la connaissance a priori de la fonction f(.). Aucune synchronisation autre que celle du multiplex lui-même n'est nécessaire pour effectuer le désentrelacement.

Le diagramme de la figure 4 présente ce mécanisme pour un seul symbole de modulation.

Dans le cas où le décodeur de canal fonctionne en décision douce, le désentrelacement s'applique en réalité non pas sur des éléments binaires, mais sur des mots (généralement de 4 bits) représentant l'estimation par le démodulateur des bits reçus.

## Revendications

1. Procédé de diffusion de données numériques, notamment pour la radiodiffusion sonore à haut débit vers des mobiles, du type assurant la répartition desdites données sous forme d'éléments numériques dans l'espace fréquence f-temps t et l'émission de trames de symboles constitués chacun d'un multiplex de fréquences porteuses orthogonales modulées par un jeu d'éléments numériques, et diffusées simultanément sur J voies parallèles,

   dans lequel la modulation est une modulation de phase à quatre états de phase, chaque fréquence porteuse dudit multiplex étant modulée par une paire d'éléments numériques,

   caractérisé en ce que lesdites paires d'éléments numériques sont constituées à partir d'une séquence source d'éléments numériques entrelacés en constituant des paquets de 2J éléments consécutifs dans ladite séquence source, et en associant les éléments deux à deux dans chaque paquet selon un critère de maximisation de dispersion des éléments numériques adjacents de la séquence source.

2. Procédé selon la revendication 1 caractérisé en ce que lesdites paires d'éléments numériques sont constituées en scindant chacun desdits paquets de données en deux demi-paquets, et en appariant les éléments numériques de même rang dans chaque demi-paquet.

3. Procédé selon l'une quelconque des revendications de 1 et 2 caractérisé en ce que les symboles utiles (23) de la trame sont constitués à partir d'une opération d'entrelacement fréquentiel au moyen d'une fonction déterministe réversible (G), ladite fonction (G) consistant en un procédé de brassage d'indices desdites fréquences, à maximisation de la dispersion des fréquences associées à des éléments numériques adjacents du signal de données source.

4. Procédé selon revendication 3 caractérisé en ce que ledit brassage d'indices consiste à appliquer une fonction du type à inversion de bit sur lesdits indices codés binaires.

5. Procédé selon l'une quelconque des revendications de 1 à 4, caractérisé en ce qu'il est du type comprenant un processus d'entrelacement fréquence-temps des éléments binaires de la séquence source, ledit entrelacement étant du type à fonction réversible,
et en ce que l'entrelacement temporel est réalisé par application de retards (53) dont la valeur est attribuée à chaque élément numérique en application d'une fonction réversible de l'indice de l'élément numérique, la fonction de retard (f) étant telle que le désentrelacement, dans l'ordre initial, et la récupération de chaque élément de la séquence source sont réalisés par application, à chaque élément numérique de même indice dans la séquence reçue, d'une valeur de retard complémentaire par rapport à la profondeur d'entrelacement maximale de la fonction de retard.

6. Procédé selon la revendication 5, caractérisé en ce que ladite fonction de retard (f) est une fonction du type à inversion de bits associant au nombre n le nombre n' tel que si $n = \Sigma_{i=0 \text{ à } p-1} n_i 2^i$ alors $n' = \Sigma_{i=0 \text{ à } p-1} n_i 2^{p-1-i}$, avec $n_i = 0$ ou 1 et p entier.

7. Procédé selon l'une quelconque des revendications 1 à 6 caractérisé en ce qu'on ménage un intervalle de garde entre chacun desdits symboles de la trame, à l'émission.

8. Procédé de réception et de décodage de données numériques diffusées selon un procédé du type assurant la répartition desdites données sous forme d'éléments numériques dans l'espace fréquence f-temps t et l'émission de trames de symboles constitués chacun d'un multiplex de fréquences porteuses orthogonales modulées par un jeu d'éléments numériques, et diffusées simultanément sur J voies parallèles,
dans lequel la modulation est une modulation de phase à quatre états de phase, chaque fréquence porteuse dudit multiplex étant modulée par une paire d'éléments numériques, caractérisé en ce que lesdites paires d'éléments numériques sont constituées à partir d'une séquence source d'éléments numériques entrelacés en constituant des paquets de 2J éléments consécutifs dans ladite séquence source, et en associant les éléments deux à deux dans chaque paquet selon un critère de maximisation de dispersion des éléments numériques adjacents de la séquence source, et en ce que le procédé de réception et de décodage comprend les étapes suivantes :

- réception (14) dudit multiplex de fréquences porteuses ;
- démodulation (15) desdites fréquences porteuses, délivrant une série de paires de mots numériques constitués d'au moins un élément binaire et représentant une estimation d'éléments numériques reçus ;
- désentrelacement fréquentiel desdits mots numériques, de façon symétrique à l'entrelacement fréquentiel mis en oeuvre à l'émission ;
- reconstruction d'une séquence estimée numérique de la séquence correspondant à l'émission, consistant à reconstituer une estimation desdits paquets de 2J éléments consécutifs, par application d'une opération symétrique audit critère de maximisation de la dispersion ;
- désentrelacement temporel de ladite séquence estimée.

9. Procédé de réception selon la revendication 8, caractérisé en ce que, l'entrelacement temporel étant réalisé par application de retards d'entrelacements (53) dont la valeur est attribuée en application d'une fonction réversible de l'indice de l'élément numérique considéré, ledit désentrelacement consiste à appliquer à chacun desdits éléments numériques reçus un retard de désentrelacement complémentaire audit retard d'entrelacement par rapport à une profondeur d'entrelacement maximale m fixée.

10. Procédé de réception selon la revendication 9, caractérisé en ce que ladite fonction réversible est une fonction (f) du type à inversion de bits associant au nombre n le nombre n' tel que si $n = \Sigma_{i=0 \text{ à } p-1} n_i 2^i$ alors $n' = \Sigma_{i=0 \text{ à } p-1} n_i 2^{p-1-i}$;

avec $n_i$=0 ou 1 et p entier,
ledit retard de désentrelacement étant proportionnel, pour un mot d'indice i, à m-1-f(i).

## Claims

1. Method for broadcasting digital data, especially for audible radio broadcasting at high bit rate to mobiles, of the type ensuring the distribution of the said data in the form of digital elements in the frequency f - time t domain and the transmission of frames of symbols, each made up of a multiplex of orthogonal carrier frequencies modulated by a set of digital elements and broadcast simultaneously over J parallel paths,
in which method the modulation is a four phase-shift keying modulation, each carrier frequency of the said multiplex being modulated by a pair of digital elements, characterised in that the said pairs of digital elements are made up from a source sequence of interleaved digital elements by making up packets of 2J consecutive elements in the said source sequence and by associating the elements two by two in each packet in accordance with a criterion for maximisation of dispersion of adjacent digital elements in the source sequence.

2. Method according to Claim 1, characterised in that the said pairs of digital elements are made up by splitting each of the said data packets into two half-packets and by pairing the digital elements of the same rank in each half-packet.

3. Method according to either of Claims 1 and 2, characterised in that the useful symbols (23) of the frame are made up starting from a frequency interleaving operation by means of a reversible deterministic function (G), the said function (G) comprising a method for index mixing of the said frequencies, for maximisation of the dispersion of the frequencies associated with adjacent digital elements in the source data signal.

4. Method according to Claim 3, characterised in that the said index mixing consists in applying a function of the bit inversion type to the said binary coded indices.

5. Method according to any one of Claims 1 to 4, characterised in that it is of the type comprising a process for frequency-time interleaving of the bits of the source sequence, the said interleaving being of the reversible function type,
and in that the temporal interleaving is effected by applying delays (53), the value of which is attributed to each digital element by applying a reversible function of the digital element index, the delay function (f) being such that the de-interleaving, into the initial order, and the recovery of each element of the source sequence are effected by applying, to each digital element having the same index in the sequence received, a delay value which is complementary with respect to the maximum depth of interleaving of the delay function.

6. Method according to Claim 5, characterised in that the said delay function (f) is a function of the bit inversion type associating the number n' with the number n such that if $n = \Sigma_{i=0 \text{ to } p\text{-}1} n_i 2^i$ then $n' = \Sigma_{i\text{-}0 \text{ to } p\text{-}1} n_i 2^{p\text{-}1\text{-}i}$, where $n_i = 0$ or 1 and p is an integer.

7. Method according to any one of Claims 1 to 6, characterised in that a guard interval is provided between each of the said symbols of the frame on transmission.

8. Method for receiving and decoding digital data broadcast in accordance with a method of the type ensuring the distribution of the said data in the form of digital elements in the frequency f - time t domain and the transmission of frames of symbols, each made up of a multiplex of orthogonal carrier frequencies modulated by a set of digital elements and broadcast simultaneously over J parallel paths,
in which method the modulation is a four phase-shift keying modulation, each carrier frequency of the said multiplex being modulated by a pair of digital elements, characterised in that the said pairs of digital elements are made up from a source sequence of interleaved digital elements by making up packets of 2J consecutive elements in the said source sequence and by associating the elements two by two in each packet in accordance with a criterion for maximisation of dispersion of adjacent digital elements in the source sequence and in that the reception and decoding method comprises the following steps:

- reception (14) of the said multiplex of carrier frequencies;
- demodulation (15) of the said carrier frequencies, providing a series of pairs of numeric words made up of at least one bit and representing an estimation of bits received;

EP 0 600 193 B1

- frequency de-interleaving of the said numeric words, symmetrically to the frequency interleaving performed on transmission;
- reconstruction of a digital estimated sequence of the sequence corresponding to the transmission, comprising reconstruction of an estimate of the said packets of 2J consecutive elements, by applying an operation symmetrical to the said criterion for maximisation of the dispersion;
- temporal de-interleaving of the said estimated sequence.

9. Reception method according to Claim 8, characterised in that, the temporal interleaving having been effected by applying interleaving delays (53), the value of which was attributed by applying a reversible function of the index of the digital element under consideration, the said de-interleaving consists in applying to each of the said digital elements received a de-interleaving delay which is complementary to the said interleaving delay with respect to a fixed maximum depth of interleaving m.

10. Reception method according to Claim 9, characterised in that the said reversible function is a function (f) of the bit inversion type associating the number n' with the number n such that if $n = \Sigma_{i=0 \text{ to } p-1} n_i 2^i$ then $n' = \Sigma_{i=0 \text{ to } p-1} n_i 2^{p-1-i}$, where $n_i = 0$ or 1 and p is an integer,
the said de-interleaving delay being proportional, for an index word i, to m-1-f(i).

**Patentansprüche**

1. Verfahren zum Senden von digitalen Daten, insbesondere für Höhrfunksendungen mit hohem Datenfluß zu mobilen Stationen, welches die Verteilung der Daten in Form digitaler Elemente im Frequenz f - Zeit t - Raum sowie das Senden von Symbolfolgen sicherstellt, von denen jedes aus einem Multiplex orthogonaler Trägerfrequenzen besteht, die durch einen Satz digitaler Elemente moduliert werden und gleichzeitig über J parallele Kanäle gesendet werden,
wobei es sich bei der Modulation um eine Vierphasenzustandsmodulation handelt und wobei die Trägerfrequenz des Mutliplexes von einem Paar digitaler Elemente moduliert wird,
dadurch gekennzeichnet, daß die Paare digitaler Elemente auf der Grundlage einer Quellenfolge von verschachtelten digitalen Elementen aufgebaut sind, wobei Pakete von 2J aufeinanderfolgenden Elementen der Quellenfolge gebildet werden und wobei die Elemente paarweise in jedem Paket angeordnet werden, nach einem Kriterium für das Maximieren der Streuung der nebeneinanderliegenden digitalen Elemente der Quellenfolge

2. Verfahren gemäß Anspruch 1,
dadurch gekennzeichnet, daß die Paare digitaler Elemente durch Trennen eines jeden der Datenpakete in zwei Halbpakete gebildet werden und durch paarweises Zusammenfügen der digitalen Elemente gleichen Ranges in jedem halben Paket.

3. Verfahren gemäß einem der Ansprüche 1 oder 2,
dadurch gekennzeichnet, daß die nützlichen Symbole (23) der Folge aus einer frequenzmäßigen Verschachtelung mit Hilfe einer deterministischen reversiblen Funktion (G) entstehen, wobei die Funktion (G) aus einem Verfahren zum Durchmischen der Frequenzindizes besteht, bei dem eine Maximierung der Streuung der Frequenzen erfolgt, die nebeneinanderliegenden digitalen Elementen des Quellendatensignals zugeordnet sind.

4. Verfahren gemäß Anspruch 3,
dadurch gekennzeichnet, daß die Durchmischung der Indizes darin besteht, daß eine Funktion vom Typ der Bitumkehrung auf die binär kodierten Indizes angewandt wird.

5. Verfahren gemäß einem der Ansprüche 1 bis 4,
dadurch gekennzeichnet, daß es von der Art ist, welche ein Zeit-Frequenz-Verschachtelungsverfahren der Binärelemente der Quellenfolge umfaßt, wobei die Verschachtelung von der Art mit umkehrbarer Funktion ist und, daß die zeitliche Verschachtelung durch Anwendung von Verzögerungen (53) erfolgt, deren Wert jedem digitalen Element zugeordnet wird, in Anwendung einer umkehrbaren Funktion des Index des digitalen Elementes, wobei die Verzögerungsfunktion (f) derart ist, daß die Entschachtelung in der Ausgangsreihenfolge und die Wiedergewinnung eines jeden Elementes der Quellenfolge dadurch realisiert wird, daß jedem digitalen Element mit gleichem Index innerhalb der empfangenen Folge ein Verzögerungswert zugeordnet wird, welcher der Tiefe der maximalen Verschachtelung der Verzögerungsfunktion mit gleichem Index entspricht.

8

6. Verfahren gemäß Anspruch 5,
dadurch gekennzeichnet, daß die Verzögerungsfunktion (f) eine Funktion von der Art der Bitumkehrungsfunktionen ist, die der Zahl n die Zahl n' zuordnet, so daß wenn $n = \Sigma_{i = 0 \text{ bis } p-1} n_i 2^i$ ist, die folgende Beziehung gilt: $n' = \Sigma_{i = 0 \text{ bis } p-1} n_i 2^{p-1-i}$,
wobei $n_i = 0$ oder 1 und p eine ganze Zahl ist.

7. Verfahren gemäß einem der Ansprüche 1 bis 6,
dadurch gekennzeichnet, daß beim Senden zwischen je zwei Symbolen der Folge ein Schutzintervall eingefügt wird.

8. Verfahren zum Empfang und zum Dekodieren von digitalen Daten, die nach einem Verfahren von der Art gesendet werden, das die Verteilung dieser Daten in Form digitaler Elemente im Frequenz f - Zeit t - Raum sowie das Senden von Symbolfolgen sicherstellt, von denen jedes aus einem Multiplex orthogonaler Trägerfrequenzen besteht, die durch einen Satz digitaler Elemente moduliert und gleichzeitig über J parallele Kanäle gesendet werden,
wobei es sich bei der Modulation um eine Vierphasenzustandsmodulation handelt und wobei die Trägerfrequenz des Mutliplexes von einem Paar digitaler Elemente moduliert wird,
dadurch gekennzeichnet, daß die Paare digitaler Elemente auf der Grundlage einer Quellenfolge von verschachtelten digitalen Elementen aufgebaut sind, wobei Pakete von 2J aufeinanderfolgenden Elementen der Quellenfolge gebildet werden und wobei die Elemente paarweise in jedem Paket angeordnet werden, nach einem Kriterium für das Maximieren der Streuung der nebeneinanderliegenden digitalen Elemente der Quellenfolge und,
daß es die folgenden Schritte umfaßt:

- Empfang (14) des Trägerfrequenzmultiplexes;
- Demodulation (15) der Trägerfrequenzen, wobei eine Reihe von Paaren digitaler Wörter geliefert werden, die aus mindestens einem Binärelement bestehen und eine Abschätzung empfangener digitaler Elemente darstellen;
- frequenzmäßige Entschachtelung dieser digitalen Wörter, symmetrisch zur frequenzmäßigen Verschachtelung, die beim Senden angewandt wurde;
- Rekonstruktion einer geschätzten digitalen Folge der Folge, die dem Senden entspricht, bestehend in der Wiederherstellung einer Schätzung der Pakete mit 2J aufeinanderfolgenden Elementen, durch Anwendung einer Operation, die zum Kriterium der Zerstreuungsmaximierung symmetrisch ist;
- zeitliche Entschachtelung der geschätzten Folge.

9. Empfangsverfahren gemäß Anspruch 8,
dadurch gekennzeichnet, daß wenn die zeitliche Verschachtelung durch Anwendung von Verschachtelungsverzögerungen (53) verwirklicht wird, deren Wert als Anwendung einer umkehrbaren Funktion des Indexes des betrachteten digitalen Elementes zugeordnet wird, wobei die Entschachtelung darin besteht, jedes empfangene digitale Element einer Entschachtelungsverzögerung zu unterziehen, die zur Verschachtelungsverzögerung im Verhältnis zu einer festgelegten maximalen Verschachtelungstiefe m komplementär ist.

10. Empfangsverfahren gemäß Anspruch 9,
dadurch gekennzeichnet, daß die umkehrbare Funktion eine Funktion (f) vom Typ der Bitumkehrung ist, die der Zahl n die Zahl n' zuordnet, so daß wenn $n = \Sigma_{i = 0 \text{ bis } p-1} n_i 2^i$ ist, die folgende Beziehung gilt: $n' = \Sigma_{i=0 \text{ bis } p-1} n_i 2^{p-1-i}$,
wobei $n_i = O$ oder 1 und p eine ganze Zahl ist,
wobei die Entschachtelungsverzögerung für ein Wort mit Index i zu m-1-f(i) proportional ist.

FIG.1

FIG.2

FIG.4

FIG.5

| j | j=F(i) | i |
|---|---|---|
| 0 | 0 | |
| 1 | 256 | |
| 2 | 128 | 0 |
| 3 | 384 | 1 |
| 4 | 64 | 2 |
| 5 | 320 | 3 |
| 6 | 192 | 4 |
| 7 | 448 | 5 |
| 8 | 32 | 6 |
| 9 | 288 | 7 |
| 10 | 160 | 8 |
| 11 | 416 | 9 |
| 12 | 96 | 10 |
| 13 | 352 | 11 |
| 14 | 224 | 12 |
| 15 | 480 | 13 |
| 16 | 16 | |
| 17 | 272 | 14 |
| ⋮ | ⋮ | ⋮ |
| 495 | 495 | |
| 496 | 31 | |
| 497 | 287 | 434 |
| 498 | 159 | 435 |
| 499 | 415 | 436 |
| 500 | 95 | 437 |
| 501 | 351 | 438 |
| 502 | 223 | 439 |
| 503 | 479 | 440 |
| 504 | 63 | 441 |
| 505 | 319 | 442 |
| 506 | 191 | 443 |
| 507 | 447 | 444 |
| 508 | 127 | 445 |
| 509 | 383 | 446 |
| 510 | 255 | 447 |
| 511 | 511 | |